# FASCICULE DE BREVET EUROPEEN

(11) **EP 1 436 631 B1**
(45) Date de publication et mention de la délivrance du brevet: **05.01.2011**
(21) Numéro de dépôt: 02783222.9
(22) Date de dépôt: 27.09.2002
(51) Int. Cl.: G01P 13/02, G01P 15/03

(54) **DISPOSITIF DE SECURISATION DU DEPLACEMENT D'UN ORGANE MOBILE**
VORRICHTUNG ZUR SICHERUNG DER VERSCHIEBUNG EINES BEWEGLICHEN ORGANS
DEVICE FOR MAKING SECURE A MOBILE MEMBER DISPLACEMENT

(30) Priorité: 05.10.2001 FR 0112868
(43) Date de publication de la demande: 14.07.2004
(73) Titulaire: Thales, 75008 Paris (FR)
(72) Inventeur: ROBERGE, Philippe c/o Thales Intellectual Property, 94117 Arcueil Cedex (FR)
(74) Mandataire: Collet, Alain
(86) Numéro de dépôt international: PCT/FR2002/003312
(87) Numéro de publication internationale: WO 2003/042706

(56) Documents cités:
- DE-A1- 2 856 424
- DE-A1- 2 856 424
- DE-A1- 19 509 931
- DE-A1- 19 509 931
- GB-A- 2 270 200
- GB-A- 2 270 200
- US-A- 3 882 721
- US-A- 4 278 219
- US-A- 5 334 963
- US-A- 5 334 963
- US-A- 5 438 865
- US-A- 5 966 066
- US-A- 5 966 066

## Description

L'invention se rapporte à un dispositif de sécurisation du déplacement d'un organe mobile.

L'invention trouve une utilité particulière dans les sondes d'incidence utilisées en aéronautique. De telles sondes, montées sur la peau d'un aéronef, mesurent l'incidence d'un flux d'air par rapport à l'aéronef. Ces sondes participent à la sécurité du vol de l'aéronef. Elles permettent notamment de prévenir le décrochage. Elles sont situées généralement à l'avant de l'aéronef, souvent en position horizontale (position dite 3 heures ou 9 heures). Ces sondes peuvent comporter une palette mobile en rotation autour d'un axe perpendiculaire à la peau de l'aéronef. La palette mobile s'oriente dans l'axe du flux l'entourant. L'orientation de la palette mobile permet de déterminer l'incidence de l'aéronef. La palette constitue un appendice situé à l'extérieur de la peau de l'aéronef. Comme tous les appendices, le risque est grand de les endommager lors d'opérations de maintenance au sol de l'aéronef.

Un choc sur la palette mobile peut avoir n'importe quelle direction et il faudrait que cette direction soit exactement celle du plan de symétrie de la palette pour qu'il n'entraîne pas de rotation de la palette. De plus, un tel choc tend à déformer la palette dans une direction où son inertie est la plus grande. Ce choc a donc peu de chance d'endommager la forme générale de la palette et ne déformera que le bord d'attaque de celle-ci. Une telle déformation est toujours visible. En conséquence, on ne s'intéressera, par la suite, qu'aux chocs susceptibles d'entraîner la rotation de la palette. Ces chocs constituent l'essentiel des dommages que la palette peut subir. De plus, ces chocs sont susceptibles de voiler la palette, entraînant ainsi de mauvaises mesures d'incidence. Ce type de déformation est, par ailleurs, peu visible.

Les palettes mobiles ne peuvent pas effectuer une rotation complète de 360° autour de leur axe de rotation. La rotation est limitée par des butées laissant par exemple une amplitude de l'ordre de 90° comme par exemple décrit dans les documents US 5 438 865 A et US 3 882 721 A.

L'invention a pour but de détecter des chocs risquant de déformer la palette. Ce type de choc entraîne un effort anormal de la palette sur l'une de ses butées. Lorsque la détection est effective, on est amené à recalibrer la palette, par exemple en soufflerie.

A cet effet, l'invention a pour objet une sonde aéronautique telle que revendiquée.

L'effort nominal est défini comme un effort limite exercé sur l'organe mobile. Si la valeur de l'effort exercé sur la butée dépasse la valeur de l'effort nominal ou limite, l'organe mobile risque de subir des dommages irréversibles comme par exemple une déformation permanente. Le dépassement de la valeur de l'effort nominal renseigne sur l'existence de dommages subis par l'organe mobile. L'effort nominal est par conséquent non nul.

Avantageusement, l'énergie utilisée par les moyens de mémorisation pour leur fonctionnement ne provient que de l'énergie apportée par l'effort exercé sur la butée, par l'organe mobile.

Avantageusement, les moyens de mémorisation comportent des moyens pour modifier la position de la butée. Autrement dit, la butée s'escamote lorsque l'effort exercé sur la butée par l'organe mobile dépasse la valeur d'un effort nominal. Plus précisément, la butée est dans une première position tant que la valeur de l'effort nominal n'est pas atteinte et la butée atteint une deuxième position lorsque la valeur de l'effort nominal est dépassée. La butée conserve la deuxième position même lorsque la valeur de l'effort exercé sur la butée par l'organe mobile devient inférieure à la valeur de l'effort nominal après l'avoir dépassé.

L'invention sera mieux comprise et d'autres avantages apparaîtront à la lecture de la description détaillée de plusieurs modes de réalisation, description illustrée par le dessin joint dans lequel :
- la figure 1 représente un premier mode de réalisation d'une butée escamotable, pour laquelle un élément magnétique permet de mémoriser le dépassement de la valeur de l'effort nominal ;
- la figure 2 représente un second mode de réalisation d'une butée escamotable, pour laquelle une bille, liée à la butée, se déplace d'un logement à un autre lorsque la valeur d'un effort exercé sur la butée dépasse la valeur de l'effort nominal ;
- la figure 3 représente une sonde d'incidence comportant une palette mobile en rotation, vue dans un plan perpendiculaire à l'axe de rotation de la palette ;
- la figure 4 représente une butée actionnant un interrupteur lorsque la valeur de l'effort appliquée sur la butée dépasse la valeur de l'effort nominal.

Pour plus de commodité, les mêmes éléments porteront les mêmes repères topologiques dans les différentes figures.

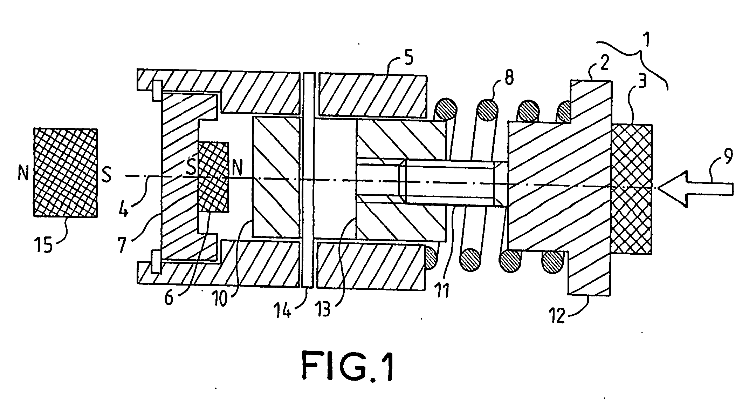

Le dispositif représenté sur la figure 1 comporte une butée 1 sur laquelle un organe mobile, non représenté, est destiné à s'appuyer. La butée 1 comporte une partie rigide 2 et une partie élastique 3, solidaire de la partie rigide 2, par exemple en élastomère, sur laquelle s'établit le contact avec l'organe mobile. La butée 1 est susceptible de se déplacer en translation selon un axe 4. Le mouvement de l'organe mobile peut se faire également en translation selon l'axe 4. Ce mouvement peut tout aussi bien se faire selon un axe de rotation perpendiculaire au plan de la figure 1. L'organe mobile comporte alors un élément dont le mouvement tangente sensiblement l'axe 4 au niveau du contact de cet élément avec la butée 1 sur la partie élastique 3. Le mouvement de translation de la butée selon l'axe 4 s'effectue par rapport à un corps de butée 5 ayant la forme d'un tube creux d'axe 4, par exemple cylindrique, à l'intérieur duquel la butée 1 est susceptible de se déplacer.

Un aimant permanent 6 est solidaire du corps de butée 5. L'aimant permanent 6 est par exemple relié au corps de butée 5 par l'intermédiaire d'un support d'aimant 7. La partie rigide 2 est réalisée dans un matériau magnétique tel qu'elle puisse être attirée par l'aimant permanent 6 lorsque la partie rigide 2 est située au voisinage de l'aimant permanent 6. Avantageusement, le flux magnétique peut traverser le support d'aimant 7, et le corps de butée 5. A cet effet, la partie rigide 2, le support d'aimant 7, et le corps de butée 5 peuvent être réalisés en acier doux.

Un élément élastique 8, comme par exemple un ressort hélicoïdal, maintient la partie rigide 2 à une distance donnée de l'aimant permanent 6. L'élément élastique 8 s'appuie entre la partie rigide 2 et le corps de butée 5. Lorsque la butée 1 se déplace en translation selon l'axe 4 sous l'effet d'un effort exercé par l'organe mobile, dans la direction de la flèche 9, la partie rigide 2 de la butée 1 s'approche de l'aimant permanent 6. Si la valeur de l'effort exercé sur la butée 1 par l'organe mobile est suffisant, autrement dit, si la valeur de l'effort exercé dépasse la valeur d'un effort nominal, la partie rigide 2 vient au contact de l'aimant permanent 6, et la force magnétique, exercée par celui-ci, est telle que la partie rigide 2 se maintient au contact de l'aimant permanent 6, même lorsque l'effort exercé sur la butée 1 par l'organe mobile a disparu.

Le fait que la partie rigide 2 soit en contact avec l'aimant permanent 6 montre que la valeur de l'effort exercé par l'organe mobile sur la butée 1 a été plus important que la valeur d'un effort donné dit effort nominal.

Avantageusement, le dispositif comporte des moyens pour régler la valeur de l'effort nominal. Le réglage de la valeur de l'effort nominal peut se faire en choisissant les dimensions et la raideur de l'élément élastique 8. En complément, la partie rigide 2 peut comporter des moyens de réglage de sa longueur suivant l'axe 4 afin de permettre le réglage de l'effort nominal, même après le choix d'un élément élastique 8 déterminé. Ces moyens de réglage comportent avantageusement un piston 10 pouvant coulisser à l'intérieur du corps de butée 5, un système vis-écrou 11 et un arbre épaulé 12. La partie élastique 3 est solidaire de l'arbre épaulé 12. L'élément élastique 8 s'appuie entre l'arbre épaulé 12 et le corps de butée 5. Le système vis-écrou 11 permet de déplacer le piston 10 par rapport à l'arbre épaulé 12. En manoeuvrant le système vis-écrou 11, on règle la distance entre le piston 10 et l'aimant permanent 6, ce qui permet, par conséquent, de régler la valeur de l'effort nominal.

Avantageusement, la butée 1 comporte des moyens pour limiter son déplacement en translation suivant l'axe 4, par rapport au corps de butée 5. Ces moyens comportent par exemple un trou oblong 13 réalisé dans la partie rigide 2 ou, plus précisément dans le piston 10, ainsi qu'une goupille 14. Le trou oblong 13 est radial par rapport à l'axe 4. La goupille 14 est fixée dans le corps de butée 5 et traverse le trou oblong 13. Le déplacement de la butée 1 est limité par les dimensions du trou oblong 13 à l'intérieur duquel la goupille 14 effectue un déplacement relatif par rapport au piston 10. Les moyens pour limiter le déplacement en translation suivant l'axe 4 de la butée permettent de maintenir l'élément élastique 8 légèrement comprimé, même en l'absence d'effort exercé par l'organe mobile sur la butée 5.

Une fois que la butée 1 est en contact avec l'aimant permanent 6, il est possible de prévoir des moyens de réarmement de la butée 1, ou plus précisément des moyens pour la ramener dans la position qu'elle avait avant de subir un effort dont la valeur est supérieure à la valeur de l'effort nominal dans la direction de la flèche 9. Le réarmement peut se faire en tirant sur la butée 1 dans la direction opposée à la flèche 9. Cette méthode est peu précise et risque d'endommager le dispositif par exemple au niveau de la goupille 14. Pour éviter ce risque, les moyens de réarmement peuvent comporter un second aimant permanent 15 dont la puissance est sensiblement supérieure à celle de l'aimant permanent 6. Pour réarmer la butée 1, on approche le second aimant permanent 15 du support d'aimant 7 selon l'axe 4. Le second aimant permanent 15 est orienté de telle façon que son pôle, le plus proche du support d'aimant 7, soit de la même polarité que le pôle en contact avec le support d'aimant 7 du premier aimant 6.

Lorsque le second aimant permanent 15 s'approche du premier aimant permanent 6, l'effort d'attraction conjugué des deux aimants permanents 6 et 15 sur le piston 10 diminue et devient inférieur à l'effort exercé par le ressort 8. Le piston 10 tend alors à reprendre sa position initiale avant l'effort exercé par l'organe mobile.

Il est bien entendu possible de remplacer l'un ou l'autre des aimants permanents 6 et 15 par des électroaimants.

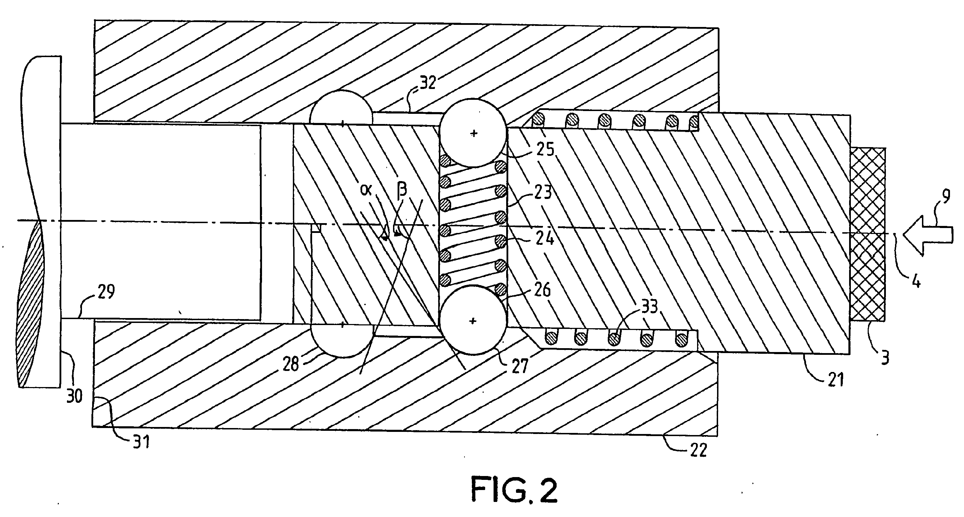

La figure 2 représente un second mode de réalisation d'une butée 20 escamotable. La butée 20 comporte un piston 21, solidaire de la partie élastique 3, susceptible de se déplacer en translation selon l'axe 4 sous l'effet d'un effort exercé dans la direction de la flèche 9 par l'organe mobile. Le piston 21 se déplace en translation à l'intérieur d'un corps de butée 22. Le piston 21 comporte un trou 23 cylindrique radial le traversant de part en part. A l'intérieur du trou 23, on dispose un élément élastique 24 comme, par exemple, un ressort hélicoïdal. Deux billes 25 et 26 s'appuient sur chacune des extrémités de l'élément élastique 24. Les deux billes 25 et 26 peuvent coulisser à l'intérieur du trou 23 lorsqu'on exerce un effort radial, par rapport à l'axe 4, sur chacune d'elle. Tant que la valeur de l'effort exercé par l'organe mobile sur la butée 20 n'a pas atteint la valeur de l'effort nominal, le piston 21 est dans une première position par rapport au corps de butée 22. C'est cette position qui est représentée sur la figure 2. Dans cette première position, les billes 25 et 26 sont en partie logées dans une gorge 27 ménagée dans le corps de butée 22. La gorge 27 est, par exemple, torique autour de l'axe 4. Le petit diamètre du tore est sensiblement celui des billes 25 et 26.

Lorsque la valeur de l'effort exercé par l'organe mobile sur la butée 20 dépasse la valeur de l'effort nominal, l'élément élastique 24 se rétracte sous une poussée centripète des billes 25 et 26. Cette poussée centripète est due au fait que les billes 25 et 26 quittent la gorge 27. Le piston 21 se déplace alors à l'intérieur du corps de butée 22 jusqu'à ce que les billes 25 et 26 atteignent une seconde position dans laquelle elles se logent dans une seconde gorge 28 ménagée dans le corps de butée 22. Comme la gorge 27, la gorge 28 est par exemple torique autour de l'axe 4.

Dans le mode de réalisation décrit à l'aide de la figure 2, il est également possible de prévoir des moyens pour réarmer la butée 20 ou, plus précisément, pour la ramener, de la position où les billes 25 et 26 sont dans la gorge 28, vers la position où les billes 25 et 26 sont dans la gorge 27. Le réarmement peut se faire en tirant sur la butée 20 dans le sens opposé à la flèche 9. Cette méthode est peu précise et risque d'entraîner la butée 20 au-delà de sa première position. On préfère donc pousser la butée 20 toujours dans le sens opposé à la flèche 9. Cette poussée se fait avantageusement avec un cylindre 29 comportant un épaulement 30. Le cylindre 29 pénètre à l'intérieur du corps de butée 22 et pousse le piston 21 pour réarmer la butée 20. L'épaulement 30, venant en appui contre une surface 31 du corps de butée 20, limite le déplacement de la butée 20 lorsqu'elle est poussée par le cylindre 29.

Le dispositif comporte des moyens pour régler la valeur de l'effort nominal. Ce réglage peut être effectué lors de la réalisation des pièces constitutives du dispositif. Par exemple, la profondeur de la gorge 27 permet de régler la valeur de l'effort nominal. Plus précisément, on définit un angle α entre l'axe 4 et une tangente à la gorge 27 au point où l'une des billes 25 ou 26 peut échapper à la gorge 27 lorsqu'un effort est exercé par l'organe mobile sur la butée 20 dans la direction de la flèche 9. La valeur de l'angle α détermine la valeur de l'effort nominal pour un élément élastique 24 donné. Plus l'angle α est important, plus la valeur de l'effort nominal augmente.

De même, en réglant la profondeur de la gorge 28, il est possible de régler l'effort nécessaire à réarmer la butée 20. Plus précisément, la valeur de l'angle β que fait l'axe 4 avec la tangente à la gorge 28 au point où l'une des billes 25 ou 26 peut échapper la gorge 28 pour réarmer la butée 20 , détermine l'effort nécessaire au réarmement de la butée.

Le réglage de la valeur des angles α et β peut se faire en augmentant le diamètre intérieur 32 du corps de butée 22 entre les gorges 27 et 28.

Avantageusement, le dispositif comporte des moyens pour empêcher la butée 20 de dépasser la deuxième position. A cet effet, l'angle que fait l'axe 4, avec la tangente à la gorge 28, au point le plus éloigné de la partie élastique 3, est un angle droit. Ainsi, lorsque les billes 25 et 26 viennent s'appuyer contre ce point, sous l'action de l'organe mobile, la butée 20 ne peut pas dépasser cette position.

On peut, en outre, modifier la valeur des efforts, nominal et de réarmement, en interposant un élément élastique supplémentaire 33 entre le corps de butée 22 et le piston 21. L'élément élastique 33 est, par exemple, un ressort hélicoïdal se comprimant dans la direction de l'axe 4 lorsque l'organe mobile appuie sur la butée 20.

Le dispositif décrit à l'aide de la figure 2 comporte deux billes 25 et 26. Il est également envisageable de définir un dispositif ne comportant qu'une seule bille. Le trou 23, à l'intérieur duquel peut coulisser la bille, est alors un trou borgne.

En variante, la fonction remplie par les gorges 27 et 28, à savoir matérialiser les positions des billes 25 et 26 dans le corps de butée 22, peut être remplie par des trous cylindriques radiaux par rapport à l'axe 4 et ménagés dans le corps de butée 22. Le diamètre de ces trous permet de régler la valeur des efforts nominal et de réarmement de la butée 20. Ces trous peuvent être taraudés et une vis montée dans chaque trou par l'extérieur du corps de butée 22 permet de régler la valeur des efforts nominal et de réarmement de la butée 20. Cette vis, montée dans un trou remplaçant la gorge 27 permet également de faciliter l'extraction de la butée 20 du corps de butée 22 en réduisant la valeur de l'effort nécessaire à cette extraction. L'extraction se fait en poussant la butée 20 dans le sens opposé à la flèche 9 au-delà de la première position.

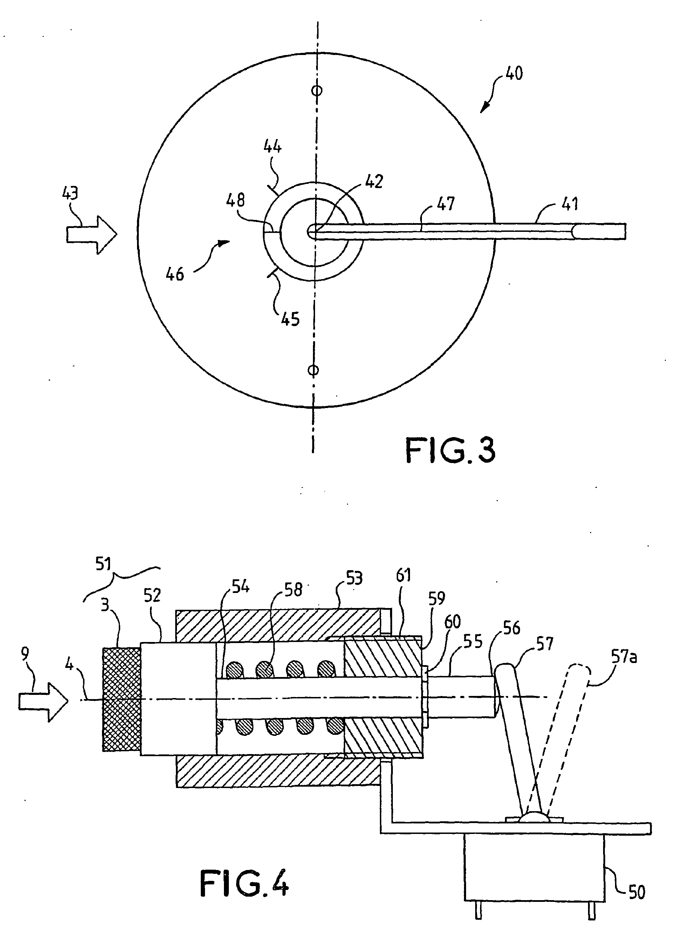

La figure 3 représente une sonde d'incidence 40 en vue de dessus. La sonde d'incidence 40 comporte une palette mobile 41 en rotation autour d'un axe 42 perpendiculaire au plan de la figure 3. La palette mobile 41 est destinée à s'orienter dans l'axe d'un flux d'air l'entourant et dont l'orientation habituelle est représentée par la flèche 43. Le débattement de la palette mobile 41 est limité angulairement, par exemple à + ou - 45° autour de la position de la palette dans son orientation habituelle représentée sur la figure 3. Des butées, comme par exemple celles décrites à l'aide des figures 1 et 2, empêchent la palette mobile 41 de dépasser la limitation angulaire. L'organe mobile est alors solidaire de la palette mobile et le corps de butée 5 ou 22 est solidaire d'une partie fixe 46 de la sonde d'incidence 40.

Des repères 44 et 45, portés sur la partie fixe 46 de la sonde d'incidence 40, permettent de visualiser le débattement maximum de la palette mobile 41. Plus précisément, lorsque l'organe mobile appuie, sans dépasser la valeur de l'effort nominal, sur l'une des butées 1 ou 20, le plan de symétrie 47 de la palette mobile 41 est aligné avec l'un des repères 44 ou 45. Avantageusement, un repère 48, porté par la palette mobile 41 et aligné sur le plan de symétrie 47, est situé au voisinage des repères 44 et 45. Le repère 48 facilite la visualisation de la position de la palette mobile 41 par rapport à la partie fixe 46. En revanche, si l'organe mobile s'est trouvé en appui sur l'une des butées 1 ou 20 de façon anormale, c'est-à-dire en dépassant la valeur de l'effort nominal, cette butée 1 ou 20 s'est trouvée escamotée et la palette mobile 41 pourra dépasser son débattement maximum et le repère 48 est alors situé au-delà des repères 44 et 45. Ainsi, on pourra aisément diagnostiquer un dépassement de la valeur de l'effort nominal lorsque le plan de symétrie 47 aura dépassé l'un des repères 44 ou 45. Ce diagnostic peut se faire en faisant pivoter à la main la palette mobile 41 jusqu'à la mettre en contact avec ses butées 1 ou 20, lorsque l'aéronef, portant la sonde d'incidence 40, est posé au sol. On peut alors visualiser la position de la palette mobile 41 en observant la position relative des repères 44, 45 et 48. Néanmoins, le montage de sondes d'incidence 40 sur certains aéronef peut masquer les repères 44, 45 et 48. La visualisation de la position de la palette mobile 41 peut tout de même se faire en observant un indicateur d'incidence de l'aéronef, indicateur situé généralement sur la planche de bord de l'aéronef.

Les modes de réalisations présentées à l'aide des figures 1 et 2 ne permettent pas d'effectuer le diagnostic de dépassement de la valeur de l'effort nominal lors du vol d'un aéronef portant la sonde d'incidence 40. En effet, en vol, il est très peu probable que la palette mobile 41 atteigne l'une de ses butées 1 ou 20. Il est possible de pallier ce problème en proposant un dispositif dont une réalisation est décrite à l'aide de la figure 4. Les moyens de mémorisation comportent un interrupteur 50 à deux positions stables. L'interrupteur 50 est dans une première position, celle représentée sur la figure 4, tant que la valeur d'un effort exercé sur une butée 51 ne dépasse pas la valeur de l'effort nominal. En revanche, l'interrupteur 50 est dans une deuxième position dès que la valeur de l'effort exercé sur la butée 51 a dépassé la valeur de l'effort nominal.

La butée 51 comporte un piston 52, solidaire de la partie élastique 3, susceptible de se déplacer en translation selon l'axe 4, sous l'effet d'un effort exercé dans la direction de la flèche 9 par l'organe mobile. Le piston 52 se déplace en translation à l'intérieur d'un corps de butée 53. Une première extrémité 54 d'une tige 55 est solidaire du piston 52. La tige 55 s'étend le long de l'axe 4. Une deuxième extrémité 56 de la tige 55 est susceptible de manoeuvrer un levier 57 de l'interrupteur 50. Le levier 57 permet de modifier l'état (ouvert ou fermé) de contacts électriques appartenant à l'interrupteur 50. L'interrupteur 50 est solidaire du corps de butée 53. Un élément élastique 58 s'oppose à l'effort exercé par l'organe mobile sur la butée 51. L'élément élastique 58, par exemple un ressort hélicoïdal, s'appuie, d'une part, sur le piston 52 au voisinage de la première extrémité 54 de la tige 55 et, d'autre part, sur une culasse 59 solidaire du corps de butée 53.

La tige 55 traverse la culasse 59 et son mouvement de translation dans le sens opposé à la flèche 9 peut être empêché par exemple au moyen d'un anneau fendu 60, solidaire de la tige 55 et prenant appui contre la culasse 59 en l'absence d'effort sur la butée 51.

Tant que la valeur de l'effort exercé par l'organe mobile sur la butée 51 dans le sens de la flèche 9 n'atteint pas la valeur de l'effort nominal, le levier 57 ne modifie pas l'état des contacts de l'interrupteur 50 et revient dans la position représentée en traits continus sur la figure 4 lorsque l'effort exercé par l'organe mobile a disparu. En revanche, lorsque l'effort exercé par l'organe mobile sur la butée 51, dans le sens de la flèche 9, dépasse l'effort nominal, le levier 57 modifie l'état des contacts de l'interrupteur 50 et passe dans la position 57a du levier 57, position représentée en traits pointillés sur la figure 4.

La modification de l'état des contacts de l'interrupteur 50 peut informer une unité de traitement extérieure au dispositif et non représentée, sur le dépassement de la valeur de l'effort nominal. Avantageusement, si le dispositif est utilisé dans une sonde d'incidence 40, telle que représentée à la figure 3, lorsque le levier 57 passe à la position 57a, l'interrupteur 50 peut interrompre un circuit de réchauffage appartenant à la sonde d'incidence 40. Autrement dit, l'interrupteur 50 est situé en série dans le circuit de réchauffage et ouvre le circuit de réchauffage lorsqu'il est dans sa deuxième position 57a. L'interrupteur 50 permet alors de ne pas augmenter le nombre de voies électriques sortant de la sonde d'incidence 40. De plus, le circuit de réchauffage est généralement surveillé par une unité de contrôle de l'aéronef. Lorsque le circuit de réchauffage est interrompu, la sonde d'incidence 40 est déclarée hors service par l'unité de contrôle. Aucun élément supplémentaire n'est donc à rajouter aux moyens de surveillance déjà présents dans l'aéronef. En revanche, l'interrupteur 50 situé en série dans le circuit de réchauffage dégrade la fiabilité de ce circuit.

Le dispositif représenté sur la figure 4 comporte également des moyens pour régler la valeur de l'effort nominal. Pour effectuer ce réglage, on peut, par exemple, déplacer la culasse 59 suivant l'axe 4 par rapport au corps de butée 53. Ce déplacement peut être mis en oeuvre au moyen d'un filetage 61 entre la culasse 59 et le corps de butée 53.

## Revendications

1. Sonde aéronautique comprenant :
• Une palette constituant un appendice apte à être disposée à l'extérieur de la peau d'un aéronef, l'appendice formant un organe mobile,
• et un dispositif de sécurisation du déplacement de l'organe mobile, le déplacement étant guidé selon un axe (4 ; 42) et étant limité par au moins une butée (1 ; 20 ; 51),
**caractérisée en ce que** le dispositif de sécurisation comporte des moyens de mémorisation du dépassement de la valeur d'un effort nominal par la valeur d'un effort exercé sur la butée (1 ; 20 ; 51) par l'organe mobile selon l'axe (4 ; 42).

2. Sonde aéronautique selon la revendication 1, **caractérisée en ce que** l'axe est un axe de rotation (42).

3. Sonde aéronautique selon l'une des revendications précédentes, **caractérisée en ce que** l'énergie utilisée par les moyens de mémorisation pour leur fonctionnement ne provient que de l'énergie apportée par l'effort exercé par l'organe mobile sur la butée (1 ; 20 ; 51).

4. Sonde aéronautique selon l'une des revendications précédentes, **caractérisée en ce que** les moyens de mémorisation comportent des moyens pour modifier la position de la butée (1 ; 20 ; 51).

5. Sonde aéronautique selon la revendication 4, **caractérisée en ce que** la butée (1 ; 20) est dans une première position tant que la valeur de l'effort nominal n'est pas atteinte et **en ce que** la butée (1 ; 20) atteint une deuxième position lorsque la valeur de l'effort nominal est dépassée.

6. Sonde aéronautique selon la revendication 5, **caractérisée en ce que** la butée (1 ; 20) conserve la deuxième position.

7. Sonde aéronautique selon la revendication 6, **caractérisée en ce que** le dispositif comporte des moyens (15 ; 29) pour ramener la butée (1 ; 20) à la première position.

8. Sonde aéronautique selon l'une quelconque des revendications 5 à 7, **caractérisée en ce que** le dispositif comporte des moyens (28) pour empêcher la butée (1 ; 20) de dépasser la deuxième position.

9. Sonde aéronautique selon l'une des revendications précédentes, **caractérisée en ce que** le dispositif comporte des moyens (8 ; 11 ; 27) pour régler la valeur de l'effort nominal.

10. Sonde aéronautique selon l'une des revendications précédentes, **caractérisée en ce que** les moyens de mémorisation comportent un interrupteur (50) à deux positions stables, **en ce que** l'interrupteur (50) est dans une première position tant que la valeur de l'effort nominal n'est pas atteinte et **en ce que** l'interrupteur (50) est dans une deuxième position dès que la valeur de l'effort nominal a été dépassée.

11. Sonde aéronautique selon la revendication 10, **caractérisée en ce que** l'organe mobile est une palette mobile (41) destinée à s'orienter dans l'axe d'un flux d'air l'entourant, **en ce que** la palette mobile (41) comporte un circuit de réchauffage, **en ce que** l'interrupteur (50) est connecté en série dans le circuit de réchauffage, et **en ce que** l'interrupteur (50) ouvre le circuit de réchauffage lorsqu'il est dans sa deuxième position (57a).

## Claims

1. An aeronautical sensor including:
• a vane constituting an appendage arranged for being disposed on the outside of the skin of an aircraft, the appendage forming a moving part,
• and a device for securing movement of the moving part, the displacement being guided along an axis (4; 42) and being limited by at least one dead stop (1; 20; 51),
**characterised in that** the securing device includes means for recording when the nominal force value is exceeded by the value of a force exerted on the dead stop (1; 20; 51) by the moving part along the axis (4; 42).

2. The aeronautical sensor according to claim 1, **characterised in that** the axis is a rotation axis (42).

3. The aeronautical sensor according to any one of the previous claims, **characterised in that** the energy used by the recording means for their operation solely originates from the energy provided by the force exerted by the moving part on the dead stop (1; 20; 51).

4. The aeronautical sensor according to any one of the previous claims, **characterised in that** the recording means include means for modifying the position of the dead stop (1; 20; 51).

5. The aeronautical sensor according to claim 4, **characterised in that** the dead stop (1; 20) is in a first position as long as the value of the nominal force has not been reached and **in that** the dead stop (1; 20) reaches a second position when the value of the nominal force is exceeded.

6. The aeronautical sensor according to claim 5, **characterised in that** the dead stop (1; 20) maintains the second position.

7. The aeronautical sensor according to claim 6, **characterised in that** the device includes means (15; 29) for returning the dead stop (1; 20) to the first position.

8. The aeronautical sensor according to any one of claims 5 to 7, **characterised in that** the device includes means (28) for preventing the dead stop (1; 20) from exceeding the second position.

9. The aeronautical sensor according to any one of the previous claims, **characterised in that** the device includes means (8; 11; 27) for adjusting the value of the nominal force.

10. The aeronautical sensor according to any one of the previous claims, **characterised in that** the recording means include a stable two-way switch (50), **in that** the switch (50) is in a first position as long as the value of the nominal force has not been reached and **in that** the switch (50) is in a second position as soon as the value of the nominal force has been exceeded.

11. The aeronautical sensor according to claim 10, **characterised in that** the moving part is a moving vane (41) designed to orientate itself along the axis of an air flow surrounding said moving part, **in that** the moving vane (41) includes a heating circuit, **in that** the switch (50) is connected in series in the heating circuit, and **in that** the switch (50) opens the heating circuit when it is in its second position (57a).

## Patentansprüche

1. Aeronautischer Sensor, der Folgendes umfasst:
• einen Flügel, der einen Ansatz bildet, der auf der Außenseite der Haut eines Flugfahrzeugs angeordnet werden kann, wobei der Ansatz ein bewegliches Teil bildet,
• und eine Vorrichtung zum Sichern der Bewegung des beweglichen Teils, wobei die Bewegung entlang einer Achse (4; 42) geführt und durch wenigstens einen Anschlag (1; 20; 51) begrenzt wird,
**dadurch gekennzeichnet, dass** die Sicherungsvorrichtung Mittel zum Speichern der Überschreitung eines Kraftnennwertes durch eine Kraft umfasst, die von dem beweglichen Teil entlang der Achse (4; 42) auf den Anschlag (1; 20; 51) ausgeübt wird.

2. Aeronautischer Sensor nach Anspruch 1, **dadurch gekennzeichnet, dass** die Achse eine Rotationsachse (42) ist.

3. Aeronautischer Sensor nach einem der vorherigen Ansprüche, **dadurch gekennzeichnet, dass** die Energie, die von den Speichermitteln für deren Betrieb verbraucht wird, nur von der Energie kommt, die von der Kraft erzeugt wird, die vom beweglichen Teil auf den Anschlag (1; 20; 51) ausgeübt wird.

4. Aeronautischer Sensor nach einem der vorherigen Ansprüche, **dadurch gekennzeichnet, dass** die Speichermittel Mittel zum Modifizieren der Position des Anschlags (1; 20; 51) aufweisen.

5. Aeronautischer Sensor nach Anspruch 4, **dadurch gekennzeichnet, dass** der Anschlag (1; 20) in einer ersten Position ist, solange der Kraftnennwert nicht erreicht ist, und **dadurch**, dass der Anschlag (1; 20) eine zweite Position erreicht, wenn der Kraftnennwert überschritten wird.

6. Aeronautischer Sensor nach Anspruch 5, **dadurch gekennzeichnet, dass** der Anschlag (1; 20) die zweite Position beibehält.

7. Aeronautischer Sensor nach Anspruch 6, **dadurch gekennzeichnet, dass** die Vorrichtung Mittel (15; 29) umfasst, um den Anschlag (1; 20) in die erste Position zurückzubringen.

8. Aeronautischer Sensor nach einem der Ansprüche 5 bis 7, **dadurch gekennzeichnet, dass** die Vorrichtung Mittel (28) aufweist, um zu verhindern, dass der Anschlag (1; 20) über die zweite Position hinaus geht.

9. Aeronautischer Sensor nach einem der vorherigen Ansprüche, **dadurch gekennzeichnet, dass** die Vorrichtung Mittel (8; 11; 27) zum Regeln des Kraftnennwertes umfasst.

10. Aeronautischer Sensor nach einem der vorherigen Ansprüche, **dadurch gekennzeichnet, dass** die Speichermittel einen Schalter (50) mit zwei stabilen Positionen beinhaltet, **dadurch**, dass der Schalter (50) in einer ersten Position ist, solange der Kraftnennwert nicht erreicht ist, und **dadurch**, dass der Schalter (50) in einer zweiten Position ist, sobald der Kraftnennwert überschritten wird.

11. Aeronautischer Sensor nach Anspruch 10, **dadurch gekennzeichnet, dass** der bewegliche Teil ein beweglicher Flügel (41) ist, der so ausgelegt ist, dass er sich entlang der Achse eines den beweglichen Teil umgebenden Luftstroms ausrichtet, **dadurch**, dass der bewegliche Flügel (41) eine Heizschaltung beinhaltet, **dadurch**, dass der Schalter (50) in Serie mit der Heizschaltung geschaltet ist, und **dadurch**, dass der Schalter (50) die Heizschaltung öffnet, wenn er in seiner zweiten Position (57a) ist.
